# EUROPEAN PATENT SPECIFICATION

(11) **EP 1 748 715 B1**
(45) Date of publication and mention of the grant of the patent: **21.11.2007**
(21) Application number: 05745370.6
(22) Date of filing: 26.05.2005
(51) Int. Cl.: A47K 11/02

(54) **TOILET SYSTEM**
TOILETTENSYSTEM
SYSTEME DE TOILETTE

(30) Priority: 26.05.2004 SE 0401394
(43) Date of publication of application: 07.02.2007
(73) Proprietor: R J Produkter AB, 542 31 Mariestad (SE); Combutech AB, 183 22 Täby (SE)
(72) Inventor: JOHANSSON, Rune, S-542 31 Mariestad (SE); EHNHAGE, Lars, S-183 57 Täby (SE)
(74) Representative: Larfeldt, Helene
(86) International application number: PCT/SE2005/000788
(87) International publication number: WO 2005/115211

(56) References cited:
- US-A- 3 319 588
- US-A- 4 161 792
- US-A1- 2004 034 906
- PATENT ABSTRACTS OF JAPAN vol. 004, no. 139 30 September 1980 & JP 55 095 014 A (GOKOU SEISAKUSHO:KK) 18 July 1980

## Description

The present invention relates to a toilet system and at which an incineration of collected urine and faeces takes place in a separate combustion chamber in providing a great user capacity of said toilet system.

In the market there are today a number of different types of toilets without connection to the public sewage-system, which have different solutions of collecting devices for urine and faeces (see for example US-4161792-A). Many of these toilets have proved to be constructed in a most complicated way and are also expensive with a high operating cost. It has also proved to be complicated to carry out a simple an odour-free discharging of the contents when needed and in those cases that the toilet is of a kind where incineration of the faeces takes place it has been difficult to accomplish an efficient and economical incineration.

The object of the present invention is to eliminate these problems and to provide a new type of toilet included in a toilet system having a separate combustion chamber. The distinguishing features of the invention are stated in the following claims.

Thanks to the invention a toilet system has now been provided with one in the same included combustion chamber, which in an excellent way fulfils its purpose at the same time as the system also is relatively inexpensive and easy to manufacture. The toilet system according to the invention is almost odour-free due to its ingenious structure and during discharging only a certain amount of ashes needs to be removed from the combustion chamber of the incinerator, which is done by a few simple manual operations by releasing of a simply dismountable clean-out door at the top of the combustion chamber, whereafter the ashes is simply removed by for example vacuuming the bottom of the combustion chamber. From the toilet-unit comes, after a macerating procedure, while adding water so called "blackwater" or sewage, where all solids are finely-cut in a relatively homogenous solution consisting of urine, faeces and flush water. By a special circulation of flue gases in the combustion chamber those combustion gases that generates from the incineration and vaporization of the blackwater can efficiently be removed through a special outlet.

The invention is closer described below with the aid of a preferable embodiment example and with references to the drawings enclosed, on which
- Fig. 1: shows a schematic view of the toilet system according to the invention that is controlled by a microprocessor,
- Fig. 2: shows a view from above of the combustion chamber,

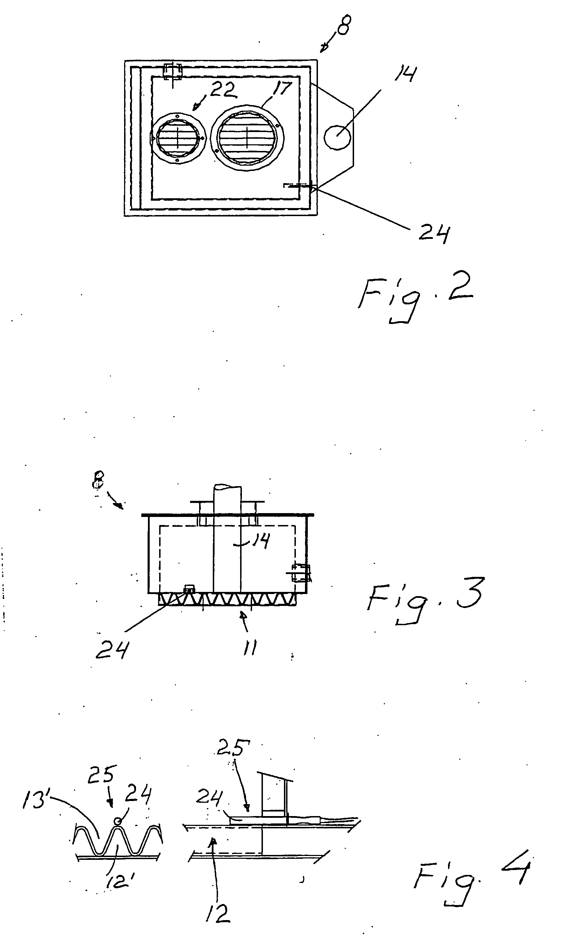

- Fig. 3: shows a side view of the combustion chamber in section and from which view is seen how the bottom of the combustion chamber is designed,
- Fig. 4: shows a part view of the bottom of the combustion chamber, that consists of a wave-profile where flue gases pass under the bottom of the combustion chamber in the wave-peak and how a sensor is located at the bottom for controlling the incineration and vaporization under assistance of a microprocessor,
- Fig. 5: shows a side view partly in section of the combustion chamber illustrated in fig. 2 and 3 and from which view is seen how the fastener for a burner is designed and how the flue gases are fed from the combustion chamber and downwards below its bottom and further on through the flue gas channels through an outlet,
- Fig. 6: shows an end view of the combustion chamber illustrated in fig. 2-5 and from which view is seen how a flue gas shield is mounted in connection to the flue gas channels in order to spread out the flue gases all over the bottom of the combustion chamber,
- Fig. 7: shows a view from the side in section of a ceramic lining, which is used to insulate the combustion chamber,
- Fig. 8: shows a view from above of the lining of fig. 7 of the combustion chamber.

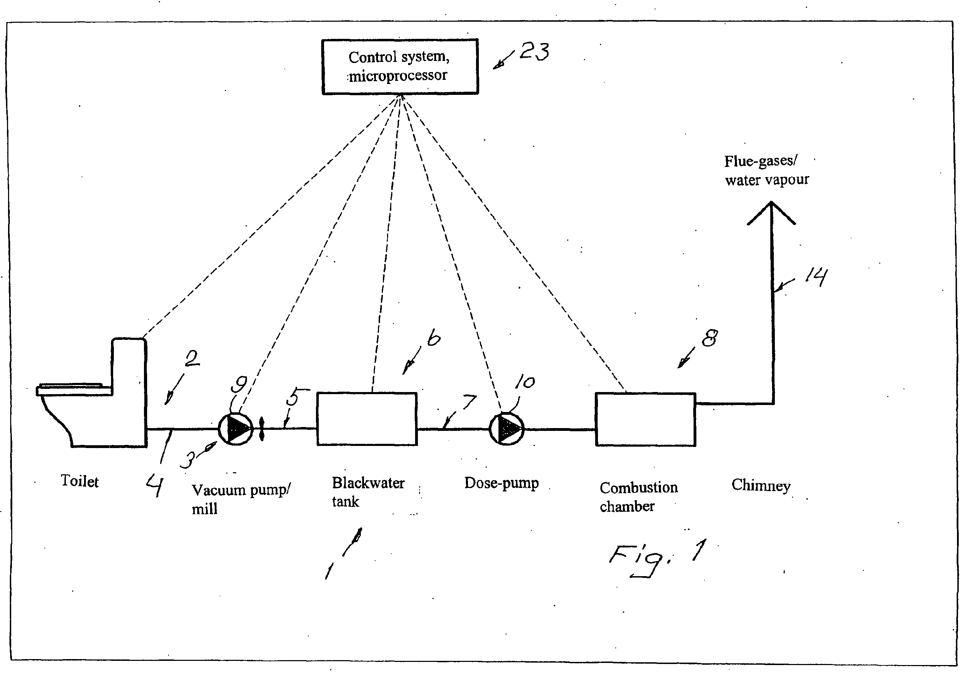

As shown in fig. 1 here is presented an embodiment example of a toilet system according to the present invention, which mainly consists of three main parts namely a toilet unit 2, a holding-tank 6 and combustion chamber 8 with economizer. The toilet unit 2 is equipped with a device 3 for macerating and transportation of the waste together with the flush water so called blackwater 4 in a first pipe 5 to the holding-tank 6, which is directly or indirectly connected via a transportation tank, not illustrated on the drawings, to the combustion chamber 8 with the economizer via a second pipe 7.

The device 3 for macerating the faeces and transportation of the blackwater 4 through the first pipe 5 to the holding-tank 6 comprises a pump 9 with a macerator known per se and/or with vacuum and the second pipe 7 is provided in this example with a dosage pump 10 for transportation of the blackwater 4 in to the combustion chamber 8, from which the flue gases are fed out via its specially designed bottom 11 through an outlet 14 to the atmosphere.

The combustion chamber 8 according to the invention is according to the presented example designed to ensure a complete incineration of all solids, faeces in said blackwater 4, that is dosed by the pump 9 in to the combustion chamber 8 from the holding tank 6 located upstreams in the system. With its unique bottom design an incineration is achieved with a high efficiency and thereby a low fuel consumption. Also the size and weight of the combustion chamber 8 has been able to be limited thanks to the efficient utilization of the excess energy in the flue gases. The bottom design of the combustion chamber 8 consists in that its bottom 11 includes a wave-profile 12, where the flue gases are passing below the entire combustion chamber bottom 11 in wave peaks 13, which are sealed downwards in order to constitute a number of parallel alongside running flue gas channels 12', through which the flue gases from the incineration pass and thereafter are guided out to the atmosphere through the outlet 14. The flue gas channels 12' are extending in the flow direction of the incineration gases at the same time as the excess of heat from the flue gases is brought back to the blackwater 4 located in the wave troughs 13', thereby a larger bottom surface is obtained in the combustion chamber 8 than otherwise, which in turn gives a higher efficiency. By the bottom design of the bottom 11 of the combustion chamber 8 the wave troughs 13' constituted by the wave-profiles 12 consist of a number of next to each other and all across the bottom extending V-formations 15 for receiving the blackwater 4. By this design the excess heat in the flue gases are brought back to the blackwater 4, which is located in the wave troughs 13' at a flange-efficiency of 100 %. In order to secure that the heat transfer is performed in a uniform way all across the combustion chamber bottom 11, a flue gas shield 16 is mounted at the end of the flue gas channels 12'. This causes a narrowing at the centre of the bottom profile in order to force the flue gases to spread evenly over the entire cross section and in this way cold spots are avoided and the entire bottom surface is used efficiently.

A well-known burner is mounted on a flange 17 directly on the top 18 of the combustion chamber 8 in such a way that the head of the burner is protected from a direct impact from both the blackwater 4 during pumping and also from vapour during the incineration process itself. The flue gases together with the vaporized blackwater 4 are fed out from the combustion chamber 8 via an opening 19 at the top 20 of the rear wall 20' of the combustion chamber. In order to give the flue gases a maximum of duration in the incineration chamber in the combustion chamber 8 the burner can be mounted as far away as possible from the flue gas opening 19. The opening 19 is designed in size after the capacity of the fan of the burner i.e. flows and pressure. The flue gases are thereafter directed into a slot 21 at the rear end of the combustion chamber 8 in under the bottom 11 of the combustion chamber.

In making the emptying of the incineration chamber of the combustion chamber 8 easier without the need to disassemble the burner, the top 18 of the combustion chamber 8 has been equipped with a simply dismountable clean-out door 22, through which the cleaning can be done by for example vacuuming. The dimensions of the combustion chamber 8 is adjusted to the output of the burner, which in its turn is determined by the number of users or the number of connected toilets.

The system according to the invention shortly functions as follows: A low flush toilet unit 2 macerates the waste at flushing and pumps the waste to the holding-tank 6. The flush water comes either from the ordinary pressure water system alternatively from a separate closed pressure water system, connected to the toilet. The holding-tank 6 will contain so called blackwater 4, where all solids are finely-cut in a relatively homogenous solution. The holding-tank 6 is designed to contain one to two days maximum usage of the toilet unit 2 and the holding-tank 6 can be located anywhere it is suitable from a space point of view. There is no demand to locate the holding-tank 6 in close connection to neither the toilet unit 2 nor the combustion chamber 8. At the outlet side of the holding-tank 6 an ordinary membrane pump can be used for transportation of the blackwater to the combustion chamber. The membrane pump is extremely reliable and totally insensitive for clogging at the same time as it operates under high pressure. The combustion chamber 8 is heated by a top mounted burner. Burner output and size of the combustion chamber can vary and is designed after the number of users of the toilet unit and the number of connected toilets. The entire process is electronically controlled and supervised by a microprocessor 23.

The incineration of the blackwater 4 from the holding-tank 6 is programmed to take place preferably at night-time but can be chosen to take place at optional occasion alternatively when the tank is full. When incineration has been decided to start by clock or alternatively full tank the microprocessor 23 gives a signal to the pump to run for a predetermined number of seconds and to pump in a first controlled amount of blackwater to the combustion chamber 8. The burner starts and operates thereafter continuously without interruption during the entire incineration. When the fluid level has decreased to the top of the wave-profile 12 of the bottom 11, a new signal is given to the pump, which pumps a second amount of blackwater into the combustion chamber 8. The vaporization goes on continuously at a constant speed and when the fluid level once again has decreased to the top of the wave-profile 12, a new signal is given to the pump for the third amount of blackwater and so on. This dosage goes on until the holding-tank 6 is empty. At this time the microprocessor 23 gives a signal to start the final incineration. This is done in order to secure a complete incineration of all solids, mainly faeces. The temperature in the combustion chamber increases hereby as no more vaporization of fluids takes place and the time for final incineration can be varied after operation conditions. The electricity supply is adaptable to 12, 24 or alternatively 220 Volt. The remains that are received from the process are totally harmless. The ashes that can be vacuumed out of the combustion chamber a few times per year and the emission to the surroundings through a chimney mounted at the outlet pipe 14, consists, besides of flue gases from the burner, of 100 % pure odour-free vapour.

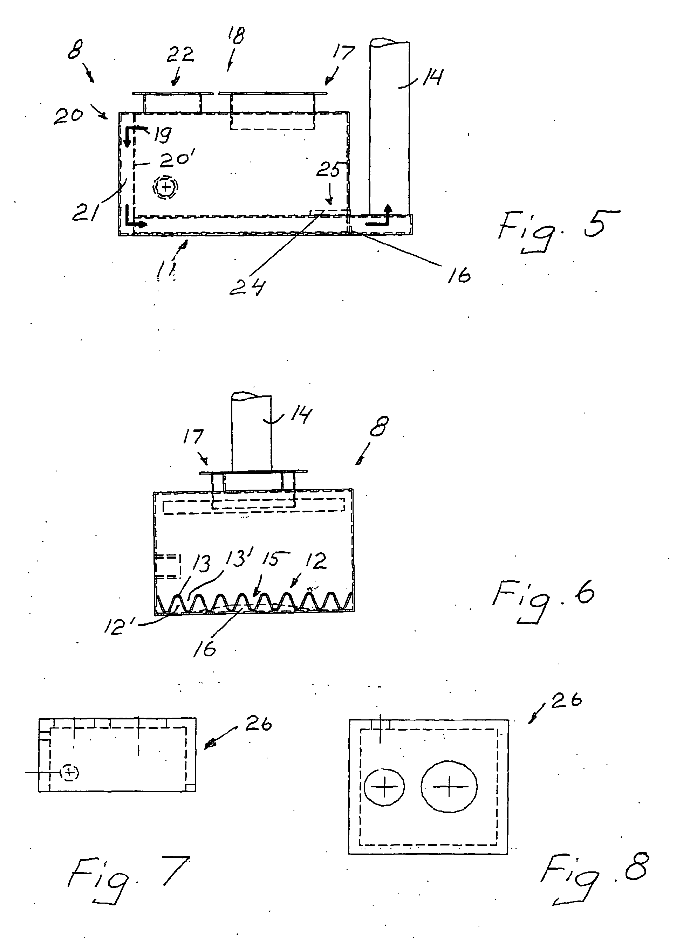

The control of the incineration and the vaporization of the blackwater 4 in the combustion chamber 8 is made by continuous registration of the change of temperature in the combustion chamber 8, which temperature is measured by a sensor 24 placed in a protective-casing 25, which is mounted in the combustion chamber 8. The location of this is of major importance in order to achieve a fast and careful registration of the vaporization. The sensor 24 is located on the same side as the flue gases leave the combustion chamber and is mounted directly on top of a wave peak 13 in accordance to fig. 4. The sensor 24 is connected to the microprocessor 23.

The principle for control is in accordance to the following: At start of operation a first fixed amount of blackwater 4 is pumped into the combustion chamber 8 and this volume is exactly as much to fill all wave troughs 13' in the profile bottom and gives a fluid surface a few millimetres above the wave peaks 13. The sensor 24 is hereby located in the blackwater and registers the fluid temperature. The burner starts and heats thereafter the blackwater 4 to 100°C, whereupon the vaporization is initiated. When the fluid level has decreased to the wave peaks 13 the sensor 24 is located in air and the temperature rises immediately. When this registers approximately 120°C a new signal is given to the pump, which pumps a second fixed amount of blackwater 4 in to the combustion chamber 8. The sensor 24 is once again located in the blackwater 4 and achieves the same temperature as the blackwater has during the moment of pumping. The temperature of the fluid rises rapidly to 100°C, which value is registered by the device 24. The temperature is registered in the microprocessor 23 until the surface of the fluid once again has decreased to the wave peaks 13, whereupon the sensor 24 rapidly registers an increasing temperature. When the temperature once again passes 120°C a signal is given to the pump to pump a third fixed amount of blackwater 4 into the combustion chamber 8. The process is repeated until the holding-tank 6 is empty. The advantage with this control is that it always takes place a maximum heat transfer from the hot flue gases to the cold fluid (100°C). If the surface of the fluid is allowed to decrease under the wave peaks 13 the heat transfer is reverted and the higher temperature in the combustion chamber heats the flue gases while passing through the flue gas channels 12' in the bottom 11. Hereby it is continuously secured during the entire vaporization process that the flange-efficiency is 100 %. When the holding-tank 6 is empty the process goes in to the final incineration and a signal is given from the tank - tank empty - whereby no further signal is given to the pump. Instead the time starts for final incineration which is pre-programmed according to actual operating conditions and during this time all fluid is vaporized, whereby only solids as remaining faeces remain in the wave troughs 13'. These are now exposed to both direct heat-radiation from the burner as to heat from the flue gases under the profile bottom. The temperature rises rapidly and eventually remaining faeces are ignited and when the temperature has reached a pre-set maximum level the burner is shut off. The time is set long enough to secure a safe final incineration.

In fig. 7 and 8 an upside down turned ceramic box 26 is illustrated, which is intended to insulate the combustion chamber 8, causing its outside not to reach a to high temperature, which otherwise could cause injuries. Besides, the efficiency further increases due to the box 26 at the same time as the temperature tensions in the non-corrosive combustion chamber is reduced. The box 26 in question is manufactured by for example Aluminium oxide (Al2O3) or Aluminium silica. The box results in a possibility to increase the temperature in the combustion chamber without increased demand to increase the thickness of the external insulation. When the right temperature is obtained in the combustion chamber 8 and the vaporization has turned into a steady-state condition, the speed of vaporization increases considerably and the energy consumption is decreased correspondingly. The increased vaporization is due to the heat storage capacity that occurs in the aluminium oxide/aluminium silica. This increased capacity is valuable mainly in those cases when the toilet system 1 is intended to be used by many users, resulting in a high load.

## Claims

1. A toilet system, **characterized in that** it includes at least one toilet unit (2) having a device (3) for macerating and transportation of waste together with flush-water, so-called blackwater (4) to a holding-tank (6), and a combustion chamber (8) with economizer connected directly or indirectly via a transportation-tank to said holding-tank (6), in said combustion chamber (8) the blackwater is incinerated.

2. A toilet system according to claim 1, **characterized in that** the device (3) for macerating and transportation of the blackwater (4) to the holding-tank (6) comprises a pump (9) having a macerator and that a dose-pump (10) is provided to transport the blackwater (4) from the holding-tank (6) to the combustion chamber (8).

3. A toilet system according to claim 1, **characterized in that** a control of the incineration and the vaporization of the blackwater (4) in the combustion chamber (8) is made by a continuous registration of the change of temperature in the combustion chamber (8), whereby the temperature is measured with a sensor (24) connected to a microprocessor (23), which is provided in a protective casing (25), which in its turn is mounted in the combustion chamber (8).

4. A toilet system according to claim 1, **characterized in that** the combustion chamber (8) includes a specially designed bottom (11), which consists by a wave profile (12) closed downwards to create a number, next to each other, alongside extending flue gas channels (12'), which upwards are delimited by wave peaks (13) and through which flue-gases from the incineration pass in order to thereafter be fed out to the atmosphere through an outlet-pipe (14), said flue gas channels (12') extend in the flow-direction of the flue gases at the same time as the excess heat from the flue gases is brought back to the blackwater (4) located in the wave troughs (13') in providing a larger bottom-surface, which in its turn gives a higher efficiency.

5. A toilet system according to claim 4, **characterized in that** the wave troughs (13'), formed by the wave profile (12) in the bottom (11) of the combustion chamber (8), consist of a number of V-formations (15) extending next to each other all over the bottom (11) in order to contain the blackwater (4).

6. A toilet system according to claim 4, **characterized in that** a flue gas shield (16) is provided at the end of the flue gas channels (12') in order to secure an uniform heat-recover over the whole bottom (11) of the combustion chamber (8).

7. A toilet system according to any of the preceding claims, **characterized in that** the combustion chamber (8) has an assembly-flange (17) for a burner mounted directly above the top (18) of the combustion chamber (8), said flange (17) extends into the combustion chamber (8) a predetermined distance in order to achieve a protection of the burners burner-head from direct exposure from both the blackwater (4) at pumping as to the vapour during the incineration-process.

8. A toilet system according to claims 3 and 4, **characterized in that** the sensor (24) in its protective-casing (25) is mounted on the same side of the combustion chamber (8) as the flue gases are fed out from the combustion area, directly on top of a wave-peak (13).

## Patentansprüche

1. Toilettensystem, **dadurch gekennzeichnet, dass** es wenigstens eine Toiletteneinheit (2) mit einer Einrichtung (3) zum Aufweichen und Transportieren von Abfall zusammen mit Spülungswasser, so genanntem Schwarzwasser (4), zu einem Fäkalientank (6) und einen Verbrennungsraum (8) mit Sparanlage, direkt oder indirekt über einen Transporttank mit dem Fäkalientank (6) verbunden, umfasst, wobei das Schwarzwasser in dem Verbrennungsraum verbrannt wird.

2. Toilettensystem nach Anspruch 1, **dadurch gekennzeichnet, dass** die Einrichtung (3) zum Aufweichen und Transportieren des Schwarzwassers (4) zu dem Fäkalientank (6) eine Pumpe (9) mit einem Zerkleinerer umfasst und dass eine Dosierpumpe (10) bereitgestellt ist, um das Schwarzwasser (4) von dem Fäkalientank (6) zu dem Verbrennungsraum (8) zu transportieren.

3. Toilettensystem nach Anspruch 1, **dadurch gekennzeichnet, dass** durch kontinuierliche Erfassung der Änderung der Temperatur in dem Verbrennungsraum (8) eine Steuerung der Verbrennung und der Verdampfung des Schwarzwassers (4) in dem Verbrennungsraum (8) erfolgt, wobei die Temperatur mit einem mit einem Mikroprozessor (23) verbundenen Sensor (24) gemessen wird, der in einem Schutzgehäuse (25) bereitgestellt ist, das wiederum in dem Verbrennungsraum (8) angebracht ist.

4. Toilettensystem nach Anspruch 1, **dadurch gekennzeichnet, dass** der Verbrennungsraum (8) einen speziell gestalteten Boden (11) enthält, der aus einem Wellenprofil (12) besteht, das nach unten geschlossen ist, um eine Anzahl von nebeneinander liegenden, sich längsseits erstreckenden Rauchgaskanälen (12') zu bilden, die nach oben durch Wellenspitzen (13) begrenzt sind und durch die Rauchgase der Verbrennung gehen, um danach durch ein Auslassrohr (14) nach außen in die Atmosphäre abgeführt zu werden, wobei sich die Rauchgaskanäle (14) in der Strömungsrichtung der Rauchgase erstrecken, während gleichzeitig der Wärmeüberschuss aus den Rauchgasen zu dem Schwarzwasser (4) zurückgeführt wird, das sich in den Wellentälern (13') befindet, die eine größere Bodenfläche bereitstellen, was wiederum zu höherer Effizienz führt.

5. Toilettensystem nach Anspruch 4, **dadurch gekennzeichnet, dass** die durch das Wellenprofil (12) in dem Boden (11) der Verbrennungskammer (8) ausgebildeten Wellentäler (13') aus einer Anzahl von V-Formen (15) bestehen, die sich nebeneinander über den gesamten Boden (11) erstrecken, um das Schwarzwasser (4) zu enthalten.

6. Toilettensystem nach Anspruch 4, **dadurch gekennzeichnet, dass** an den Enden der Rauchgaskanäle (12') eine Rauchgasabschirmung (16) bereitgestellt ist, um eine gleichförmige Wärmerückgewinnung über den gesamten Boden (11) des Verbrennungsraums (8) sicherzustellen.

7. Toilettensystem nach einem der vorhergehenden Ansprüche, **dadurch gekennzeichnet, dass** der Verbrennungsraum (8) einen Montageflansch (17) für einen Brenner aufweist, der direkt über der Oberseite (18) des Verbrennungsraums (8) angebracht ist, und dass sich der Flansch (17) eine vorgegebene Strecke in den Verbrennungsraum (8) erstreckt, um den Brennerkopf des Brenners davor zu schützen, sowohl dem Schwarzwasser (4) beim Pumpen als auch dem Dampf während des Verbrennungsprozesses direkt ausgesetzt zu sein.

8. Toilettensystem nach den Ansprüchen 3 und 4, **dadurch gekennzeichnet, dass** der Sensor (24) in seinem Schutzgehäuse (25) auf derselben Seite der Verbrennungskammer (8) wie der1, wo die Rauchgase aus dem Verbrennungsbereich abgeführt werden, direkt auf der Oberseite einer Wellenspitze (13) angebracht ist.

## Revendications

1. Système de toilette, **caractérisé en ce qu'**il comprend au moins une unité (2) de toilette ayant un dispositif (3) de macération et de transport de déjections, ensemble avec de l'eau de chasse, ce que l'on appelle de l'eau (4) noire, à une cuve (6) de retenue, et une chambre (8) de combustion ayant un économiseur reliée directement ou indirectement par l'intermédiaire d'une cuve de transport à la cuve (6) de retenue, l'eau noire étant incinérée dans la chambre (8) de combustion.

2. Système de toilette suivant la revendication 1, **caractérisé en ce que** le dispositif (3) de macération et de transport de l'eau (4) noire à la cuve (6) de retenue comprend une pompe (9) ayant un macérateur et **en ce qu'**une pompe (10) doseuse est prévue pour transporter l'eau (4) noire de la cuve (6) de retenue à la chambre (8) de combustion.

3. Système de toilette suivant la revendication 1, **caractérisé en ce qu'**une commande de l'incinération et de l'évaporation de l'eau (4) noire dans la chambre (8) de combustion est faite par un enregistrement continu de la variation de la température dans la chambre (8) de combustion, la température étant mesurée par un capteur (24) relié à un microprocesseur (23) qui est prévu dans un boîtier (25) de protection monté à son tour dans la chambre (8) de combustion.

4. Système de toilette suivant la revendication 1, **caractérisé en ce que** la chambre (8) de combustion comprend un fond (11) conçu spécialement qui consiste en un profilé (12) ondulé fermé vers le bas pour créer un certain nombre, proches les uns des autres, de canaux (12') de gaz de combustion s'étendant longitudinalement et délimités vers le haut par des crêtes (13) d'ondulation et par lesquels des gaz de combustion provenant de l'incinération passent afin d'être envoyés ensuite à l'atmosphère par un conduit (14) de sortie, les canaux (12') de gaz de combustion s'étendant dans la direction d'écoulement des gaz de combustion en même temps que la chaleur en excès provenant des gaz de combustion est ramenée à l'eau (4) noire disposée dans des auges (13') ondulées pour ménager une surface de fond assez grande, ce qui donne un rendement plus grand.

5. Système de toilette suivant la revendication 4, **caractérisé en ce que** les auges (13') ondulées formées par le profilé (12) ondulé dans le fond (11) de la chambre (8) de combustion consistent en un certain nombre de conformations (15) en V s'étendant les unes à côté des autres sur tout le fond (11) afin de contenir l'eau (4) noire.

6. Système de toilette suivant la revendication 4, **caractérisé en ce qu'**un bouclier (16) pour les gaz de combustion est prévu à l'extrémité des canaux (12') pour les gaz de combustion afin d'assurer une récupération uniforme de la chaleur sur tout le fond (11) de la chambre (8) de combustion.

7. Système de toilette suivant l'une quelconque des revendications précédentes, **caractérisé en ce que** la chambre (8) de combustion a une bride (17) d'assemblage pour un brûleur monté directement au-dessus du sommet (18) de la chambre (8) de combustion, la bride (17) s'étendant dans la chambre (8) de combustion sur une distance déterminée à l'avance afin d'obtenir une protection de la tête des brûleurs vis-à-vis d'une exposition directe à la fois à l'eau (4) noire lors du pompage et à la vapeur pendant l'opération d'incinération.

8. Système de toilette suivant les revendications 3 et 4, **caractérisé en ce que** le capteur (24) dans son boîtier (25) de protection est monté du même côté de la chambre (8) de combustion que celui où les gaz de combustion sont envoyés de la zone de combustion directement sur le sommet d'une crête (13) d'ondulation.
